(19) Europäisches Patentamt

**European Patent Office**

**Office européen des brevets**

(11) Veröffentlichungsnummer: **0 254 275 B1**

(12) **EUROPÄISCHE PATENTSCHRIFT**

(45) Veröffentlichungstag der Patentschrift: **22.04.92**

(21) Anmeldenummer: **87110555.7**

(22) Anmeldetag: **21.07.87**

(51) Int. Cl.⁵: **G02B 6/44**, C03C 25/02

(54) **Lichtwellenleiter mit einer Kunststoffumhüllung.**

(30) Priorität: **24.07.86 DE 3624997**

(43) Veröffentlichungstag der Anmeldung:
**27.01.88 Patentblatt 88/04**

(45) Bekanntmachung des Hinweises auf die
Patenterteilung:
**22.04.92 Patentblatt 92/17**

(84) Benannte Vertragsstaaten:
**AT BE CH DE FR GB IT LI NL SE**

(56) Entgegenhaltungen:
**EP-A- 0 171 757**
**DE-A- 2 729 648**
**DE-A- 3 147 137**
**US-A- 4 099 837**
**US-A- 4 367 918**

(73) Patentinhaber: **SIEMENS AKTIENGESELL-
SCHAFT**
**Wittelsbacherplatz 2**
**W-8000 München 2(DE)**

(72) Erfinder: **Mayr, Ernst, Ing. grad.**
**Wernbergstrasse 5**
**W-8130 Starnberg(DE)**
Erfinder: **Saller, Helmut**
**Diemendorfstrasse 8**
**W-8000 München 71(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft einen Lichtwellenleiter mit einer ihn allseitig umschließenden Umhüllung aus Kunststoffmaterial.

Aus der US PS 4,056,651 ist es bekannt, auf eine Lichtleitfaser einen Polyimidfilm in flüssiger Form aufzubringen, wobei zusätzlich ein Silan-Bindemittel und eine Schmier- und Befeuchtungssubstanz eingesetzt werden.

Diese bekannten Beschichtungsmaterialien haben folgende nachteiligen Eigenschaften:

a) Die Aufbringung erfolgt durch Eintauchen der Lichtwellenleiterfaser in einen, das jeweilige Beschichtungsmaterial in flüssiger Form enthaltenden Behälter, wobei anschließend ein Trocknungsprozeß durchgeführt werden muß. Dies ist vielfach bei hohen Durchlaufgeschwindigkeiten unerwünscht, außerdem hat es den Nachteil, daß es schwierig ist, genau definierte und vorgegebene (vor allem größere) Wandstärken aufzutragen.

b) Mit dieser Technik ist es nicht möglich eine genau definierte (dicke) Gleitschicht (1- oder 2-Komponenten-Füllmassen) einzubringen.

Der Erfindung liegt die Aufgabe zugrunde, ein Umhüllungsmaterial für einen Lichtwellenleiter anzugeben, das hochtemperaturstabil ist, schrumpfarm verarbeitet werden kann und sich auch in dünnen Schichten gut extrudieren läßt. Gemäß der Erfindung wird diese Aufgabe bei einem Lichtwellenleiter der eingangs genannten Art dadurch gelöst, daß das Kunststoffmaterial für die Umhüllung ein durch Extrusion aufgebrachtes Polyetherimid, ein Polyethersulfon oder ein Polysulfon ist.

Durch die Erfindung ist eine Umhüllung für Lichtwellenleiter geschaffen, welche eine hohe Zugfestigkeit aufweist, flammwidrige Eigenschaften hat (OI = 47%), halogenfrei aufgebaut ist, sich beständig gegen ultraviolettes Licht zeigt und durch Hydrolyse nicht zersetzt wird. Ein weiterer Vorteil besteht darin, daß es wenig Wasser aufnimmt. Die genannten Werkstoffe sind ideal geeignet als Einschichtenmantel für Kompaktadern, insbesondere für Bändchenkabel aber auch als Material für ein- oder zweischichtige gefüllte LWL-Adern, Bündeladern oder Maxibündeladern. Auch hochtemperaturfeste Adern, insbesondere in größeren Bündeln, lassen sich mit der erfindungsgemäßen Beschichtung in vorteilhafter Weise versehen.

Die Erfindung und ihre Weiterbildungen werden nachfolgend anhand von Zeichnungen näher erläutert. Es zeigen:

Figur 1    teilweise geschnitten, den Aufbau einer Extrusionsvorrichtung für die Aufbringung der erfindungsgemäßen Umhüllung und

Figur 2    einen umhüllten Lichtwellenleiter gemäß der Erfindung im Querschnitt.

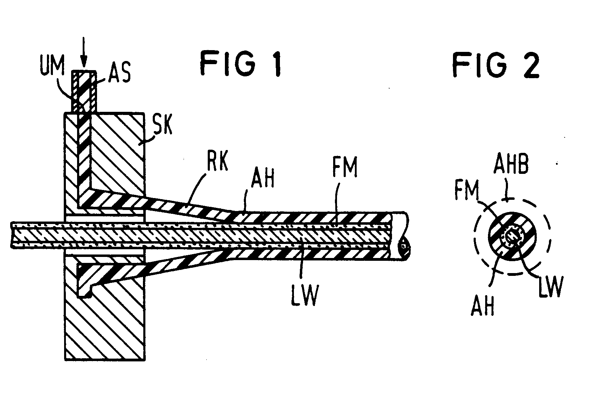

In Figur 1 ist der Spritzkopf SK eines Extruders teilweise geschnitten und in schematischer Darstellung gezeichnet. Ein Lichtwellenleiter LW mit einer dünnen Schicht einer weichen Füllmasse FM durchläuft die Öffnung des Spritzkopfes SK von links nach rechts. Über einen Anschlußstutzen AS wird das Umhüllungsmaterial UM zugeführt, welches aus einem Polyetherimid oder einem Polyethersulfon oder einem Polysulfon besteht. Der sich am Ausgang des Spritzkopfes SK bildende Reckkegel RK wird soweit heruntergereckt, bis die entstehende schlauchförmige Umhüllung (Aderhülle) AH auf der Außenfläche der Füllmasse FM zu liegen kommt. Die Dicke dieser Umhüllung AH liegt zweckmäßig zwischen 0,05 und 3 mm, sie zeichnet sich durch eine hohe Zugfestigkeit aus und bedingt damit einen guten mechanischen Schutz des empfindlichen Lichtwellenleiters LW. Die Umhüllung (Aderhülle) AH außerdem flammwidrig und hat auch den Vorteil, daß sie halogenfrei aufgebaut ist. Sie weist eine hohe Beständigkeit gegen ultraviolettes Licht auf und ist hydrolysebeständig. Außerdem zeigt sie keine große Neigung zur Aufnahme von Wasser und ist schrumpfarm. Mit den Materialen Polyetherimid, Polyethersulfon und Polysulfon lassen sich somit vorteilhafte Lichtwellenleiterumhüllungen schaffen, wobei bei zweischichtigen Anordnungen (vgl. Figur 2) zweckmäßig die innere Aderhülle AH aus Polyetherimid, Polyethersulfon oder Polysulfon besteht, während für die zweite äußere Aderhülle AHB (gestrichelt dargestellt) als Material vorteilhaft ein fluorierter Kunststoff, ein Polyetheretherketon, ein Polyphenylenoxid jedoch auch Polyester, Polyether, Polyamide oder Polyurethane verwendet werden kann.

Die Eigenschaften der gemäß der Erfindung vorgesehenen Umhüllungsmaterialien im Vergleich zu bisher üblichen werden nachfolgend anhand einer Tabelle dargestellt.

Technologische Daten

2

| | E-Modul N/mm$^2$ | Streckdehnung % | Bruchdehnung % |
|---|---|---|---|
| Polyetherimid (z.B. "Ultem" 1000) | 3300 | 7 | 60 |
| Polyethersulfon (z.B. "Ultrason" E 6000) | 3150 | - (~3) | 10 |
| Polycarbonat (z.B. "Makrolon" 3118) | 1500 gem. 2300 Lit. | 6 | 65 |
| Polyamid (z.B. "Grilamid" TR55) | 1300 gem. | ~8 | 50...150 |

| | Schlagzäigkeit I/m RT | Kerbschlagzähigkeit I/m RT | TG-TemP. °C | Ol % |
|---|---|---|---|---|
| Polyetherimid (z.B. "Ultem" 1000) | - | 50 | 217 | 47 |
| Polyethersulfon (z.B. "Ultrason" E 6000) | o.B. | 1,9 | - | 41 |
| Polycarbonat (z.B. "Makrolon" 3118) | o.B. | >35 | 146 | 26 |
| Polyamid (z.B. "Grilamid" TR55) | o.B. | 6 | 154 | 26 |

o.B. = ohne Bruch

RT = bei Raumtemperatur

Chemische Beständigkeit etc.

| | H$_2$O-Aufn. % max. | Hydrolyse -80°C | Lichtbeständ. | Temp.-beständig. °C |
|---|---|---|---|---|
| Polyetherimid (z.B. "Ultem" 1000) | 1,0 | gut | gut | 170 |
| Polyethersulfon (z.B. "Ultrason" E 6000) | 2,3 | gut | schlecht | 200 |
| Polycarbonat (z.B. "Makrolon" 3118) | 0,4 | gut | gut | 120 |
| Polyamid (z.B. "Grilamid" TR55) | 3,3 | gut | schlecht | 80 |

| | Spannungsrißbeständigkeit (>2%) | | | | KW | |
|---|---|---|---|---|---|---|
| | Alkohole | Füllmassen | Ketone | chlorierte | arom. | aliph |
| Polyetherimid (z.B. "Ultem" 1000) | - | ? (+) | - | - | - | + |
| Polyethersulfon (z.B. "Ultrason" E 6000) | - | ? (+) | - | - | + | + |
| Polycarbonat (z.B. "Makrolon" 3118) | + | + | - | - | - | + |
| Polyamid (z.B. "Grilamid" TR55) | - | + | - | (+) | - | + |

- = unbeständig

+ = beständig

## Patentansprüche

1. Lichtwellenleiter (LW) mit einer ihn allseitig umschließenden Umhüllung (AH) aus Kunststoffmaterial, **dadurch gekennzeichnet,** daß als Kunststoffmaterial für die Umhüllung (AH) ein durch Extrusion aufgebrachtes Polyetherimid, ein Polyethersulfon oder ein Polysulfon verwendet ist.

2. Lichtwellenleiter nach Anspruch 1, **dadurch gekennzeichnet,** daß bei zweischichtigen Umhüllungen die innere Schicht (AH) aus Polyethersulfon oder aus Polyetherimid oder aus Polysulfon besteht.

**3.** Lichtwellenleiter nach Anspruch 2,
**dadurch gekennzeichnet,**
daß für die äußere Schicht (AHB) ein fluorierter Kunststoff, ein Polyetheretherketon, ein Polyphenylenoxid, ein Polyester, ein Polyether, ein Polyamid oder ein Polyurethan verwendet wird.

**4.** Lichtwellenleiter nach einem der vorhergehenden Ansprüche,
**dadurch gekennzeichnet,**
daß zwischen der Umhüllung (AH) und dem Lichtwellenleiter (LW) eine weiche Füllmasse (FM) vorgesehen ist.

## Claims

**1.** Optical waveguide (LW) having a Jacket (AH) of plastic material enclosing it on all sides, characterised in that a polyether imide, a polyether sulphone or a polysulphone, applied by extrusion, is used as plastic material for the jacket (AH).

**2.** Optical waveguide according to Claim 1, characterised in that, in the case of two-layered jackets, the inner layer (AH) consists of polyether sulphone or of polyether imide or of polysulphone.

**3.** Optical waveguide according to Claim 2, characterised in that a fluorinated plastic, a polyether ether ketone, a polyphenylene oxide, a polyester, a polyether, a polyamide or a polyurethane is used for the outer layer

**4.** Optical waveguide according to one of the preceding claims, characterised in that a soft filling compound (FM) is provided between the jacket (AH) and the optical waveguide (LW).

## Revendications

**1.** Guide d'ondes optiques (SW) comportant une gaine (AH) entourant de tous côtés le guide d'ondes et réalisée en une matière plastique, caractérisé par le fait qu'on utilise, comme matière plastique pour la gaine (AH), un polyétherimide déposé par extrusion, un polyéthersulfone ou un polysulfone.

**2.** Guide d'ondes optiques suivant la revendication 1, caractérisé par le fait que dans le cas de gaines formées de deux couches, la couche intérieure (AH) est constituée par du polyéthersulfone ou du polyétherimide ou du polysulfone.

**3.** Guide d'ondes optiques suivant la revendication 2, caractérisé par le fait que pour la couche extérieure (AHB), on utilise une matière plastique fluorée, une polyétheréther-cétone, un oxyde de polyphénylène, un polyester, un polyéther, un polyamide ou un polyuréthane.

**4.** Guide d'ondes optiques suivant l'une des revendications précédentes, caractérisé par le fait qu'une masse molle de remplissage (FM) est prévue entre la gaine (AH) et le guide d'ondes optiques (LW).

# FIG 1

UM AS SK RK AH FM LW

# FIG 2

AHB FM LW AH